# EUROPÄISCHE PATENTSCHRIFT

(11) **EP 2 727 221 B1**
(45) Veröffentlichungstag und Bekanntmachung des Hinweises auf die Patenterteilung: **08.04.2015**
(21) Anmeldenummer: 12727337.3
(22) Anmeldetag: 01.06.2012
(51) Int. Cl.: H02K 7/08, F16H 55/24

(54) **GETRIEBE-ANTRIEBSEINHEIT**
TRANSMISSION DRIVE UNIT
UNITÉ D'ENTRAÎNEMENT POUR TRANSMISSION

(30) Priorität: 29.06.2011 DE 102011078257
(43) Veröffentlichungstag der Anmeldung: 07.05.2014
(73) Patentinhaber: Robert Bosch GmbH, 70442 Stuttgart (DE)
(72) Erfinder: HAUSSECKER, Walter, 77830 Buehlertal (DE)
(86) Internationale Anmeldenummer: PCT/EP2012/060350
(87) Internationale Veröffentlichungsnummer: WO 2013/000659

(56) Entgegenhaltungen:
- EP-A2- 0 869 295
- DE-A1-102004 054 510
- DE-A1-102007 028 101
- DE-A1-102007 043 527
- DE-A1-102009 003 230
- JP-A- 2001 108 025
- US-A- 2 987 349
- US-A1- 2004 163 879

## Beschreibung

### Stand der Technik

Die Erfindung betrifft eine Getriebe-Antriebseinheit nach dem Oberbegriff des Anspruchs 1.

Eine derartige Getriebe-Antriebseinheit ist bereits aus der Praxis bekannt, und dient als Teil eines Komfortantriebs in einem Kraftfahrzeug, insbesondere als Bestandteil eines Fensterheberantriebs, eines Sitzfachstellungsantriebs oder ähnlichem. Dabei weist die Getriebe-Antriebseinheit ein Gehäuse auf, in dem ein Elektromotor angeordnet ist, dessen Ankerwelle einen Verzahnungsbereich aufweist, der mit einem in dem Gehäuse der Getriebe-Antriebseinheit drehbar gelagerten (Getriebe-) Zahnrad kämmt. Über das Zahnrad wird unter Reduzierung der Drehzahl das Drehmoment des Elektromotors erhöht, wobei das Zahnrad, ggf. über weitere Zahnräder, zum Antreiben eines zu verstellenden Elements, insbesondere einer Fensterscheibe oder eines Sitzes dient. Die Ankerwelle des Elektromotors ist dabei in üblicher Weise in zwei Lagern gelagert, wobei das eine Lager sich zwischen dem Elektromotor und dem Verzahnungsbereich der Ankerwelle befindet. Bei der Übertragung von Drehmomenten zwischen dem Verzahnungsbereich des Ankerwellenabschnitts und dem Zahnrad kommt es zu einer Radialkraft, die den Verzahnungsbereich der Ankerwelle von dem Zahnrad wegdrückt. Um die radiale Ausweichbewegung des Ankerwellenabschnitts zu begrenzen ist daher eine möglichst genaue und sichere Aufnahme des Lagers der Ankerwelle erforderlich, damit die entstehenden Radialkräfte abgestützt werden können.

Bei dem Stand der Technik ist es z.B. bekannt, das Lager in einer Aufnehmung aufzunehmen, die das Lager förmschlüssig umschließt. Problematisch dabei ist es, dass zur angesprochenen exakten Positionierung des Lagers in dem Gehäuse eine hochgenaue Fertigung des Gehäuses (und Bauteile des Lagers) erforderlich ist, da die Genauigkeit u.a. auch von der Genauigkeit der Lagerung des Zahnrades abhängt, welches mit seiner Verzahnung mit dem Verzahnungsbereich der Ankerwelle zusammenwirkt.

Mit der US 2987349 A ist eine elektrische Maschine bekannt geworden, bei der die Lager der Ankerwelle selbst zentrierend innerhalb eines sechseckigen, federnden Aufnahmerings angeordnet sind.

Die DE 102007043527 A1, die DE 102009003230 A1 und die JP 2001108025 A beschreiben Elektromotoren, bei denen der zylindrische Umfang der Rotorlager an eben ausgebildeten Kanten oder Flächen der Lageraufnahmen anliegt. Bei einem Elektromotor gemäß der DE 102007028101 A1 ist das freie Ende einer Rotorwelle in einem halbseitig offenen Stützlager angeordnet, so dass bei auftretenden Belastungsspitzen das Ende der Rotorwelle am Stützlager anliegt.

Mit der US 2004/163879 A1 ist ein Lenkhilfeantrieb bekannt geworden, bei dem zur Geräuschreduzierung mittels eines elastischen Elements eine Querkraft auf die Ankerwelle ausgeübt werden kann, die eine auf der Ankerwelle angeordnete Schnecke stärker gegen die Verzahnung des damit kämmenden Schneckenrads drückt.

### Offenbarung der Erfindung

Ausgehend von dem dargestellten Stand der Technik liegt der Erfindung die Aufgabe zugrunde, eine Getriebe-Antriebseinheit nach dem Oberbegriff des Anspruchs 1 derart weiterzubilden, dass eine sichere und genaue Positionierung des Lagers für die Ankerwelle ermöglicht wird, so dass die auf den Verzahnungsbereich der Ankerwelle einwirkenden Radialkräfte beim Betrieb der Getriebe-Antriebseinheit sicher aufgenommen werden, wobei gleichzeitig die Auslenkung des den Verzähnungsbereich aufweisenden Ankerwellenbereichs begrenzt sein soll. Diese Aufgabe wird bei einer Getriebe-Antriebseinheit mit den Merkmalen des Anspruchs 1 erfindungsgemäß dadurch gelöst, dass das Lager der Ankerwelle in der Aufnahme auf der dem Zahnrad gegenüberliegenden Seite punkt- oder linienförmig anliegt. Durch diese Ausbildung wird eine besonders einfache Aufnahme des Lagers in dem Gehäuse ermöglicht, die gleichzeitig eine exakte Positionierung ermöglicht.

Erfindungsgemäß ist eine konstruktive Ausgestaltung der Getriebe-Antriebseinheit vorgesehen, bei der die Anlage des Lagers in der Aufnahme in einem zum Zahnrad hin offenen Gehäuseabschnitt erfolgt. Dadurch wird ein besonders einfacher Montageablauf gewährleistet, bei der das Lager ohne besondere Krafteinwirkung in der Aufnahme montiert werden kann.

Vorteilhafte Weiterbildungen der erfindungsgemäßen Getriebe-Antriebseinheit sind in den Unteransprüchen aufgeführt.

Zur definierten Aufnahme der Radialkräfte in der Aufnahme wird weiterhin vorgeschlagen, dass die Anlage des Lagers in der Aufnahme in zwei, gegenüber einer Mittelebene der Ankerwelle schräg angeordneten Wandabschnitten erfolgt.

Um eine günstige Krafteinleitung der Radialkräfte in der Aufnahme zu ermöglichen, wird darüber hinaus vorgeschlagen, dass die beiden Wandabschnitte einen Winkel zwischen 60° und 120°, vorzugsweise 90° zueinander aufweisen.
Ganz besonders einfach und kostengünstig lässt sich der Gehäuseabschnitt ausbilden, wenn dieser einstückig am Gehäuse angeformt ist.

Eine weitere Ausgestaltung der Erfindung sieht vor, dass das Lager axial mittels wenigstens eines Sicherungselements gesichert ist. Dadurch wird ein Wandern des Lagers während des Betriebs ausgeschlossen bzw. gegebenenfalls vorhandenes Axialspiel des Lagers kann bei der Montage (zumindest in eine Richtung) minimiert werden.

Um insbesondere in jedem Lastzustand der Getriebe-Antriebseinheit stets eine Anlage des Lagers in dem Gehäuseabschnitt sicherzustellen, wird darüber hinaus vorgeschlagen, dass das Lager in dem Gehäuseabschnitt mittels eines Andrückelements gegen die Wandabschnitte kraftbeaufschlagt ist.

Eine besonders einfache bzw. kostengünstige Ausgestaltung des Andrückelements sieht vor, dass das Andrückelement als Federelement ausgebildet ist, das vorzugsweise am Bürstenhalter des Elektromotors angeformt ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Querschnitt durch eine erfindungsgemäße Getriebe-Antriebseinheit und
- Fig. 2: eine Draufsicht auf einen Teil der Getriebe-Antriebseinheit gemäß Fig. 1.

Gleiche Bauteile bzw. Bauteile mit gleicher Funktion sind in den Figuren mit den gleichen Bezugsziffern versehen.

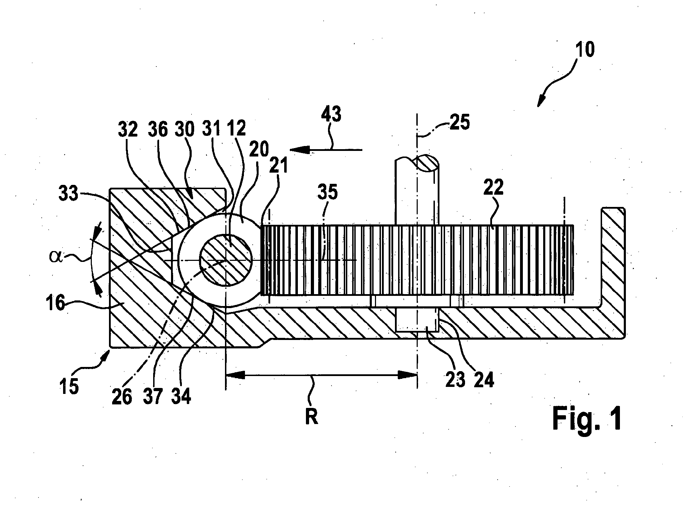

In den Figuren ist eine erfindungsgemäße Getriebe-Antriebseinheit 10 dargestellt, wie sie insbesondere als Bestandteil eines Komfortantriebs in einem Kraftfahrzeug, beispielsweise als Teil eines Fensterheberantriebs, eines Sitzverstellungsantriebs oder ähnlichem, dient. Die Getriebe-Antriebseinheit 10 weist einen im Einzelnen nicht näher dargestellten Elektromotor 11 auf, der eine Ankerwelle 12 mit einem Kommutator 13 umfasst. Die Bestandteile des Elektromotors 11 sind beispielhaft und nicht einschränkend in einem in den Figuren lediglich teilweise dargestellten Gehäuse 15 angeordnet, das insbesondere aus zwei Gehäusehalbschalen besteht, wovon lediglich die untere Gehäusehalbschale 16 in der Fig. 1 erkennbar ist. Die Ankerwelle 12 weist, axial beabstandet zum Kommutator 13, einen Verzahnungsbereich 18 auf, der insbesondere als Schneckenverzahnung ausgebildet ist. Die Ankerwelle 12 ist in wenigstens zwei Lagern gelagert, wo das eine Lager 20 in dem Bereich zwischen dem Kommutator 13 und dem Verzahnungsbereich 18 der Ankerwelle 12 angeordnet ist.

Die Ankerwelle 12 bzw. der Verzahnungsbereich 18 kämmt mit einer Außenverzahnung 21 an einem Getrieberad 22, das Bestandteil eines im Näheren nicht dargestellten Getriebes ist. Das Getrieberad 22 ist auf einer Achse 23 gelagert, die in einer als Bohrung 24 ausgebildeten Öffnung im Boden des Gehäuses 15 angeordnet ist. Zwischen der Längsachse 26 der Ankerwelle 12 und der Längsachse 25 der Achse 23 ist ein Achsabstand R ausgebildet.

Erfindungsgemäß ist es vorgesehen, dass das Lager 20 in einer Aufnahme 30 des Gehäuses 15 aufgenommen ist. Wie insbesondere anhand der Fig. 1 erkennbar ist, ist die einstückig am Gehäuse 15 angeformte Aufnahme 30 als zum Getrieberad 22 hin offene Aufnahme 30 ausgebildet, wobei die Aufnahme 30 eine in etwa U-förmige, einen Gehäuseabschnitt bildende Öffnung 31 aufweist. Die Aufnahme 30 weist drei Wandabschnitte 32 bis 34 auf, wobei der Wandabschnitt 33 parallel zur Längsachse 26 der Achse 23 verläuft, während die beiden anderen Wandabschnitte 32 und 34 symmetrisch zu einer Mittelebene 35 angeordnet sind, die in der mittleren Höhe des Getrieberads 22 durch die Längsachse 25 der Ankerwelle 12 verläuft. Die beiden Wandabschnitte 32 und 34 weisen einen Winkel α zueinander auf, der zwischen 60° und 120°, vorzugsweise 90°, beträgt. Das Lager 20 liegt an den Wandabschnitten 32 und 34 linienförmig an Kontaktlinien 36, 37 an, die senkrecht zur Zeichenebene der Fig. 1 verlaufen. Weiterhin ist das Lager 20 zum Wandabschnitt 33 beabstandet angeordnet.

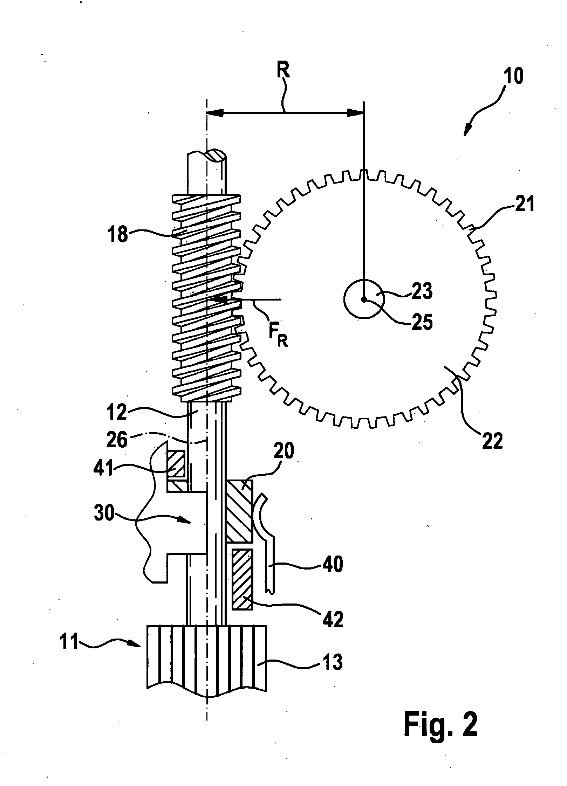

Wie insbesondere anhand der Fig. 2 erkennbar ist, ist das Lager 20 mittels eines Federelements 40 in Richtung des Wandabschnitts 33 kraftbeaufschlagt, derart, dass das Lager 20 beim Betrieb der Getriebe-Antriebseinheit 10 stets an den Kontaktlinien 36 und 37 anliegt. Das Federelement 40 ist bevorzugt am nicht dargestellten Bürstenhalter des Elektromotors 11 angeformt, so dass eine zusätzliche Befestigung des Federelements 40, beispielsweise in dem Gehäuse 15, nicht erforderlich ist.

Beidseitig des Lagers 20 sind zwei axiale Sicherungselemente 41, 42 für das Lager 20 vorgesehen. Das eine Sicherungselement 41, das auf der dem Verzahnungsbereich 18 zugewandten Seite des Lagers 20 angeordnet ist, ist dabei einstückig an der Aufnahme 30 angeformt. Das andere axiale Sicherungselement 42 ist auf der dem Verzahnungsabschnitt 18 gegenüberliegenden Seite des Lagers 20 angeordnet, und beispielsweise ebenfalls Bestandteil des Bürstenhalters.

Beim Betrieb der Getriebe-Antriebseinheit 10 wird beim Kämmen des Verzahnungsbereichs 18 der Ankerwelle 12 mit der Außenverzahnung 21 des Getrieberades 20 eine Radialkraft Fᵣ erzeugt, die die Ankerwelle 12 in die mit dem Pfeil 43 gekennzeichnete Richtung von dem Getrieberad 22 weg drückt. Die Radialkraft Fᵣ wird von dem Lager 20 aufgenommen, indem das Lager 20 sich an den Wandabschnitten 32 und 34 über die Kontaktlinien 36, 37 abstützt. Dabei findet eine Selbstzentrierung des Lagers 20 durch die geneigte Anordnung der Wandabschnitte 32 und 34 der Aufnahme 15 statt.

Die soweit beschriebene Getriebe-Antriebseinheit 10 kann modifiziert werden, ohne vom Erfindungsgedanken abzuweichen, indem beispielsweise das Lager 20 in der Aufnahme 30 lediglich punktförmig anliegt.

## Patentansprüche

1. Getriebe-Antriebseinheit (10), mit einer aus einem Elektromotor (11) herausragenden Ankerwelle (12), wobei die Ankerwelle (12) einen Verzahnungsbereich (18) aufweist, der mit einer an einem Zahnrad (22) ausgebildeten Verzahnung (21) zusammenwirkt, wobei das Zahnrad (22) in einem Gehäuse (15) gelagert ist, und wobei die Ankerwelle (12) zwischen dem Elektromotor (11) und dem Zahnrad (22) in einem Lager (20) gelagert ist, das in einer Aufnahme (30) des Gehäuses (15) aufgenommen ist, wobei, das Lager (20) in der Aufnahme (30) auf der dem Zahnrad (22) abgewandten Seite punkt- oder linienförmig anliegt, **dadurch gekennzeichnet**,
dass die Anlage des Lagers (20) in der Aufnahme (30) in einem zum Zahnrad (22) hin offenen Gehäuseabschnitt (31) erfolgt, und das Lager (20) in dem Gehäuseabschnitt (31) mittels eines Andrückelements gegen die Wandabschnitte (32, 34) der Aufnahme (30) kraftbeaufschlagt ist.

2. Getriebe-Antriebseinheit nach Anspruch 1,
**dadurch gekennzeichnet**,
dass das Gehäuse (15) aus zwei Gehäusehalbschalen besteht

3. Getriebe-Antriebseinheit nach Anspruch 1,
**dadurch gekennzeichnet**,
dass die Anlage des Lagers (20) in der Aufnahme (30) in zwei, gegenüber der Mittelebene (35) der Ankerwelle (12) schräg angeordneten Wandabschnitten (32, 34) erfolgt.

4. Getriebe-Antriebseinheit nach Anspruch 3,
**dadurch gekennzeichnet**,
dass die beiden Wandabschnitte (32, 34) einen Winkel (α) zwischen 60° und 120°, vorzugsweise 90° zueinander aufweisen.

5. Getriebe-Antriebseinheit nach Anspruch 1 bis 4,
**dadurch gekennzeichnet**,
dass die Aufnahme (30) einstückig am Gehäuse (15) angeformt ist.

6. Getriebe-Antriebseinheit nach einem der Ansprüche 1 bis 5,
**dadurch gekennzeichnet**,
dass das Lager (20) axial mittels wenigstens eines Sicherungselements (41, 42) gesichert ist.

7. Getriebe-Antriebseinheit nach Anspruch 6,
**dadurch gekennzeichnet**,
dass das wenigstens eine Sicherungselement (41) am Gehäuse (15) oder an der Aufnahme (30) angeformt ist.

8. Getriebe-Antriebseinheit nach einem der Ansprüche 6 bis 7,
**dadurch gekennzeichnet**,
dass zwei axiale Sicherungselemente (41, 42) für das Lager (20) vorgesehen sind, die beidseitig des Lagers (20) angeordnet sind.

9. Getriebe-Antriebseinheit nach Anspruch 1,
**dadurch gekennzeichnet**,
dass das Andrückelement als Federelement (40) ausgebildet ist, das vorzugsweise an einem Bürstenhalter des Elektromotors (11) angeformt ist.

10. Getriebe-Antriebseinheit nach einem der Ansprüche 1 bis 9,
**dadurch gekennzeichnet**,
dass diese Bestandteil eines Komfortantriebs in einem Kraftfahrzeug, insbesondere eines Fensterheberantriebs, eines Sitzverstellungsantriebs o.ä. ist.

## Claims

1. Gear/drive unit (10), having an armature shaft (12) which protrudes out of an electric motor (11), the armature shaft (12) having a toothing region (18) which interacts with a toothing system (21) which is formed on a gearwheel (22), the gearwheel (22) being mounted in a housing (15), and the armature shaft (12) being mounted between the electric motor (11) and the gearwheel (22) in a bearing (20) which is seated in a seat (30) of the housing (15), the bearing (20) sitting in a punctiform or linear manner in the seat (30) on the side which faces away from the gearwheel (22), **characterized in that** the bearing (20) sits in the seat (30) in a housing section (31) which is open towards the gearwheel (22), and the bearing (20) is force-loaded against the wall sections (32, 34) of the seat (30) in the housing section (31) by means of a pressure element.

2. Gear/drive unit according to Claim 1, **characterized in that** the housing (15) consists of two housing half shells.

3. Gear/drive unit according to Claim 1, **characterized in that** the bearing (20) sits in the seat (30) in two wall sections (32, 34) which are arranged obliquely with respect to the centre plane (35) of the armature shaft (12).

4. Gear/drive unit according to Claim 3, **characterized in that** the two wall sections (32, 34) are at an angle (α) with respect to one another of between 60° and 120°, preferably 90°.

5. Gear/drive unit according to Claims 1 to 4, **characterized in that** the seat (30) is formed integrally on the housing (15).

6. Gear/drive unit according to one of Claims 1 to 5, **characterized in that** the bearing (20) is secured axially by means of at least one securing element (41, 42).

7. Gear/drive unit according to Claim 6, **characterized in that** the at least one securing element (41) is formed on the housing (15) or on the seat (30).

8. Gear/drive unit according to either of Claims 6 and 7, **characterized in that** two axial securing elements (41, 42) are provided for the bearing (20), which securing elements (41, 42) are arranged on both sides of the bearing (20).

9. Gear/drive unit according to Claim 1, **characterized in that** the pressure element is configured as a spring element (40) which is preferably formed on a brush holder of the electric motor (11).

10. Gear/drive unit according to one of Claims 1 to 9, **characterized in that** it is a constituent part of a convenience drive in a motor vehicle, in particular of a window lifter drive, a seat adjusting drive or the like.

## Revendications

1. Unité d'entraînement pour transmission (10), comprenant un arbre d'induit (12) faisant saillie hors d'un moteur électrique (11), l'arbre d'induit (12) comprenant une région de denture (18) qui coopère avec une denture (21) réalisée sur une roue dentée (22), la roue dentée (22) étant montée dans un boîtier (15), et l'arbre d'induit (12) étant monté dans un palier (20) entre le moteur électrique (11) et la roue dentée (22), lequel palier est reçu dans un logement (30) du boîtier (15), le palier (20) s'appliquant de manière ponctuelle ou linéaire dans le logement (30) sur le côté opposé à la roue dentée (22), **caractérisée en ce que**
l'appui du palier (20) dans le logement (30) s'effectue dans une portion de boîtier (31) ouverte en direction de la roue dentée (22), et le palier (20) est sollicité par une force contre les portions de paroi (32, 34) du logement (30) dans la portion de boîtier (31) au moyen d'un élément de pression.

2. Unité d'entraînement pour transmission selon la revendication 1,
**caractérisée en ce que**
le boîtier (15) est constitué de deux demi-coques de boîtier.

3. Unité d'entraînement pour transmission selon la revendication 1,
**caractérisée en ce que**
l'appui du palier (20) dans le logement (30) s'effectue dans deux portions de paroi (32, 34) disposées de manière oblique par rapport au plan médian (35) de l'arbre d'induit (12).

4. Unité d'entraînement pour transmission selon la revendication 3,
**caractérisée en ce que**
les deux portions de paroi (32, 34) présentent un angle (α) d'entre 60° et 120°, de préférence de 90°, l'une par rapport à l'autre.

5. Unité d'entraînement pour transmission selon les revendications 1 à 4,
**caractérisée en ce que**
le logement (30) est formé d'une seule pièce sur le boîtier (15).

6. Unité d'entraînement pour transmission selon l'une quelconque des revendications 1 à 5,
**caractérisée en ce que**
le palier (20) est fixé axialement au moyen d'au moins un élément de fixation (41, 42).

7. Unité d'entraînement pour transmission selon la revendication 6,
**caractérisée en ce que**
l'au moins un élément de fixation (41) est formé sur le boîtier (15) ou sur le logement (30).

8. Unité d'entraînement pour transmission selon l'une quelconque des revendications 6 et 7,
**caractérisée en ce que**
deux éléments de fixation axiaux (41, 42) sont prévus pour le palier (20), lesquels sont disposés des deux côtés du palier (20).

9. Unité d'entraînement pour transmission selon la revendication 1,
**caractérisée en ce que**
l'élément de pression est réalisé sous forme d'élément de ressort (40) qui est formé de préférence sur un porte-balais du moteur électrique (11).

10. Unité d'entraînement pour transmission selon l'une quelconque des revendications 1 à 9,
**caractérisée en ce que**
celle-ci fait partie d'un entraînement de confort dans un véhicule automobile, en particulier d'un entraînement de lève-vitre, d'un entraînement de réglage de siège ou similaire.
